# EUROPÄISCHE PATENTSCHRIFT

(11) **EP 1 135 231 B1**
(45) Veröffentlichungstag und Bekanntmachung des Hinweises auf die Patenterteilung: **06.02.2002**
(21) Anmeldenummer: 99958144.0
(22) Anmeldetag: 01.12.1999
(51) Int. Cl.: B23D 57/00, B28D 1/08

(54) **SEILSÄGEMASCHINE**
CABLE-SAW MACHINE
MACHINE A SCIER A CABLE

(30) Priorität: 01.12.1998 DE 29821386 U
(43) Veröffentlichungstag der Anmeldung: 26.09.2001
(73) Patentinhaber: Steiner, Andreas, 5310 Tiefengraben (AT)
(72) Erfinder: Steiner, Andreas, 5310 Tiefengraben (AT)
(74) Vertreter: Ernicke, Hans-Dieter, Dipl.-Ing.
(86) Internationale Anmeldenummer: EP9909321
(87) Internationale Veröffentlichungsnummer: WO0032340

(56) Entgegenhaltungen:
- WO-A-95/18692
- DE-A- 3 532 717
- DE-U- 29 805 457
- US-A- 4 854 296
- PATENT ABSTRACTS OF JAPAN vol. 011, no. 006 (M-551), 8. Januar 1987 (1987-01-08) -& JP 61 182759 A (SUMITOMO METAL IND LTD;OTHERS: 01), 15. August 1986 (1986-08-15)
- PATENT ABSTRACTS OF JAPAN vol. 1995, no. 11, 26. Dezember 1995 (1995-12-26) -& JP 07 227833 A (CONCRETE KOORING KK), 29. August 1995 (1995-08-29)

## Beschreibung

Die Erfindung betrifft eine Seilsägemaschine mit den Merkmalen im Oberbegriff des Hauptanspruchs.

Eine solche Seilsägemaschine ist aus der WO 95/18692 oder der parallelen EP-B1-0 738 194 bekannt. Sie besteht aus einem Gestell, einem motorischen Antrieb und einem integrierten Seilspeicher für ein einzelnes endloses und umlaufend angetriebenes Sägeseil. Das aus der Seilsägemaschine austretende Sägeseil wird in einer einlagigen Schleife um das Werkstück und wieder zurück in die Seilsägemaschine geführt. Der Antrieb besitzt einen Motor und ein einzelnes Antriebsrad, um welches das Sägeseil geschlungen ist. Durch den nach dem Flaschenzug-Prinzip funktionierenden Seilspeicher mit mindestens.einer stationären Umlenkrolle und mehreren beweglichen Umlenkrollen wird das Sägeseil entsprechend der fortschreitenden Schnitttiefe am Werkstück unter Aufnahme und Speicherung der freiwerdenden Seillänge nachgespannt. Bei dieser Anordnung kann es Probleme mit der Betriebssicherheit und Standfestigkeit der Seilsägemaschine bzw. des Sägeseils geben.

Aus der JP-A-61-182 759 ist eine Drahtsäge bekannt, mit der ein stangenförmiges Werkzeug in einem Vorgang in mehrere Scheiben zerschnitten wird. Hierfür wird der endliche Draht von einem Drahtvorrat zugeführt und in der Drahtsäge auf mehreren Umlenkrollen zu einem Dreieck aufgespannt. Der Draht wird hierbei mehrmals über die Umlenkrollen geschlungen, wodurch sich im Spann- und Schneidbereich mehrere parallele Drahtbahnen ergeben, die ein gleichzeitiges Abtrennen mehrerer Werkstückscheiben erlauben. Die drei Umlenkrollen werden gemeinsam von einem Motor angetrieben und untereinander mittels eines Zahnriementriebs gekuppelt.

Es ist daher Aufgabe der vorliegenden Erfindung, eine bessere Seilsägemaschine aufzuzeigen.

Die Erfindung löst diese Aufgabe mit den Merkmalen im Hauptanspruch.
Der erfindungsgemäße Antrieb sorgt für eine hohe Betriebssicherheit und Standfestigkeit der Seilsägemaschine und des Sägeseils. Das Sägeseil ist auf mehreren Antriebsrädern sicher geführt, wobei die Antriebsenergie im wesentlichen schlupf- und verschleißfrei auf das Sägeseil übertragen wird. Der Antrieb kommt mit einem einzigen Motor aus, der die Antriebsräder gegebenenfalls durch ein zwischengeschaltetes Gebtriebe mit gleicher Geschwindigkeit antreibt. Diese Anordnung ist besonders wirtschaftlich und verringert den Bau- und Platzaufwand. Außerdem wird die Steuerung vereinfacht.

Eine besonders wirtschaftliche und kostengünstige Ausführung ergibt sich, wenn der Antriebsmotor über eine geeignete Wechselkupplung lösbar an der Seilsägemaschine angeordnet ist. Der Einsatz einer steckbaren Schnellkupplung bietet den Vorteil einer leichten und schnellen Auswechselbarkeit und einer Standardisierung der Schnittstelle zwischen verschiedenen Maschinen. Der Motor läßt sich dadurch für sich allein oder ggf. in Verbindung mit dem Getriebe an verschiedenen Bearbeitungsmaschinen einsetzen. Die Seilsägemaschine und andere Bearbeitungsmaschinen können somit als kostengünstige antriebslose Rumpfmaschinen ausgebildet sein, die dann bei Bedarf mit dem Motor und ggf. dem Getriebe komplettiert werden. In diesem Zusammenhang ist es vorteilhaft, wenn der Antriebsmotor als Elektromotor ausgebildet ist.

Der erfindungsgemäße Antrieb bietet besondere Vorteile auch in Verbindung mit dem Seilspeicher. Dieser besitzt mehrere stationäre und bewegliche Umlenkrollen. Dabei hat der Einsatz von Doppelrollen mit zwei Rillen den Vorteil, daß unterschiedlichste Seilbelegungen möglich sind. Dadurch läßt sich die Speicherkapazität in beliebiger Wiese variieren. Zugleich ist der Platz- und Bauaufwand minimiert. Die Seilsägemaschine wird trotz der großen Variationsbreite nicht vergrößert.

Durch die erfindungsgemäße Rollenanordnung und auch die besondere Gestaltung des Seilein- und Auslaufs mit Schrägstellung und seitlichem Versatz bietet eine verbesserte Führung und Kinematik für das Sägeseil.

Die Seilsägemaschine läßt sich vorteilhafterweise in mindestens drei Grundkomponenten zerlegen, nämlich eine Gestelleinheit, einen Hauptrollenkopf und eine Motoreinheit, die ggf. unter Einbeziehung der Antriebsräder auch zu einer umfassenderen Antriebseinheit ausgestaltet sein kann. In diesen drei oder mehr Grundkomponenten läßt sich der Transport und das Handling der Seilsägemaschine vereinfachen und erleichtern. Durch das geringere Gewicht können insbesondere die Einzelkomponenten leichter transportiert und an der Arbeitsstelle aufgebaut und montiert werden. Zudem ist der Platzbedarf der zerlegten Seilsägemaschine geringer.

In den Unteransprüchen sind weitere vorteilhafte Ausgestaltungen der Erfindung angegeben.

Die Erfindung ist in den Zeichnungen beispielsweise und schematisch dagestellt. Im einzelnen zeigen:
- Figur 1:: eine Seilsägemaschine in Seitenansicht,
- Figur 2:: eine Draufsicht der Anordnung von Figur 1 und
- Figur 3:: eine Stirnansicht der Anordnung von Figur 1 und 2,
- Figur 4 bis 7:: verschiedene Seilbelegungsmöglichkeiten für die Seilsägemaschine von Figur 1 bis 3,
- Figur 8:: eine Variante einer Seilsägemaschine in Seitenansicht,
- Figur 9:: eine Explosionsdarstellung einer Variante der Seilsägemaschine,
- Figur 10:: eine perspektivische Ansicht einer weiteren Variante zur Seilsägemaschine von Figur 9 von hinten und
- Figur 11 bis 13:: eine Anbaustellung der Seilsägemaschine in verschiedenen Ansichten.

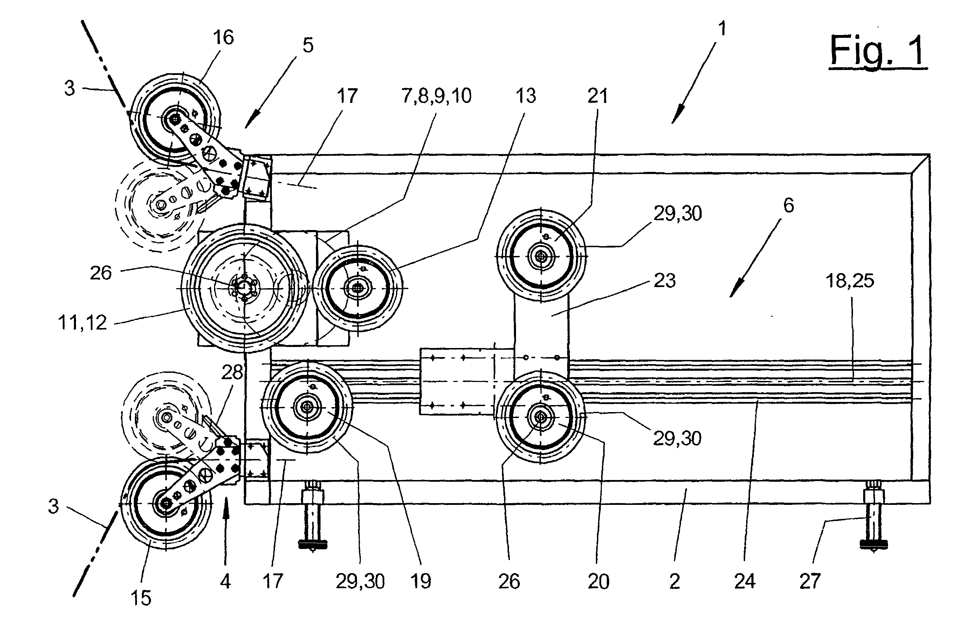

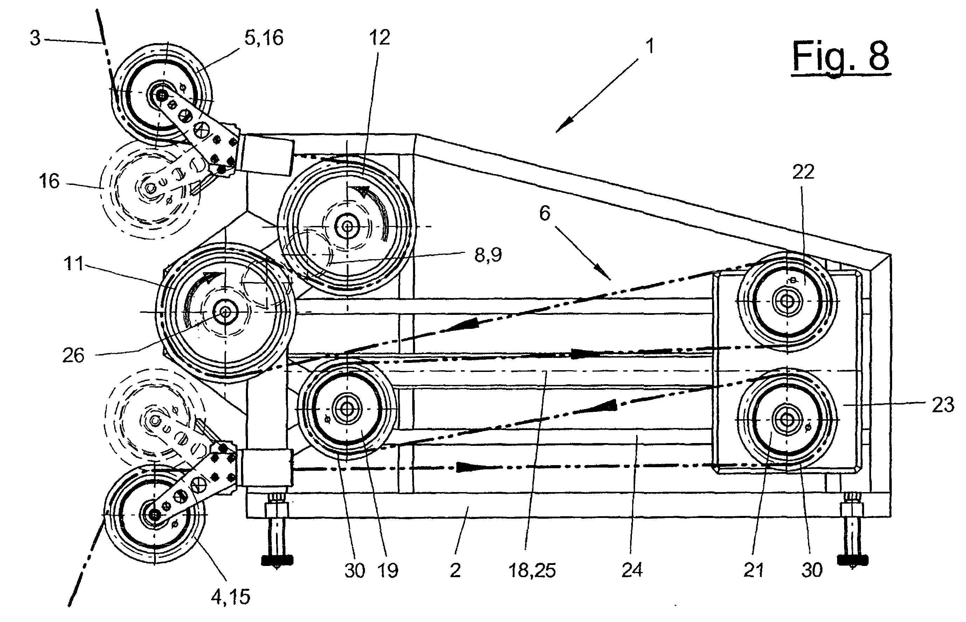

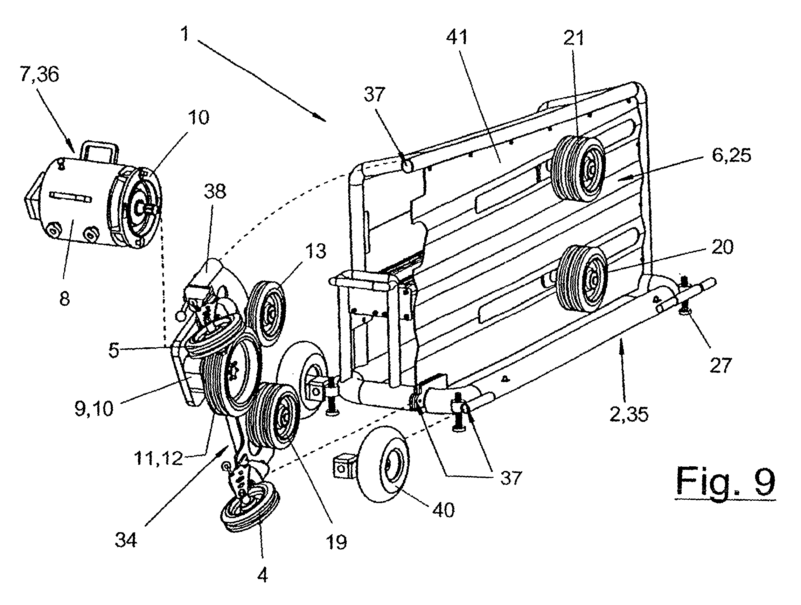

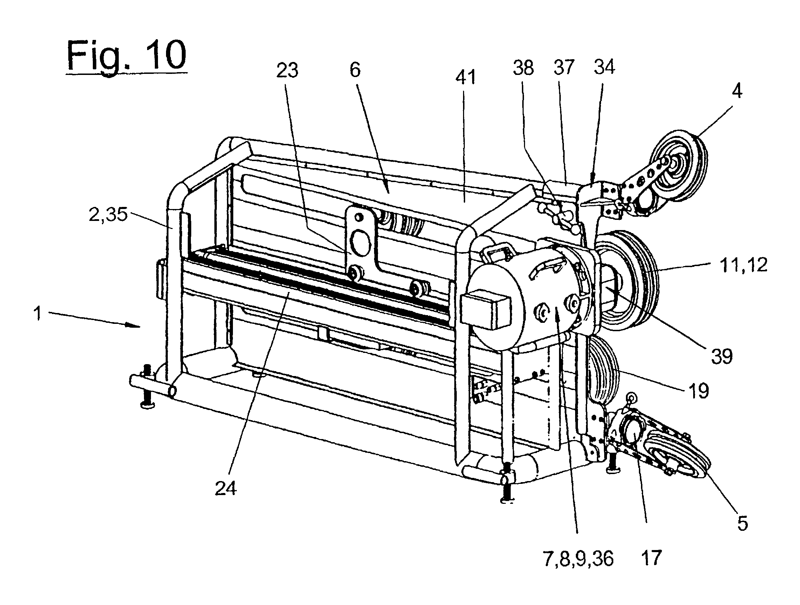

Figur 1 bis 3 zeigen eine Seilsägemaschine (1) in Seitenansicht, Draufsicht und Stirnansicht. Figur 8 zeigt eine Variante der Seilsägemaschine (1) in einer Seitenansicht. In Figur 9 und 10 sind weitere Varianten in Explosionsdarstellung und in perspektivischer Ansicht dargestellt.

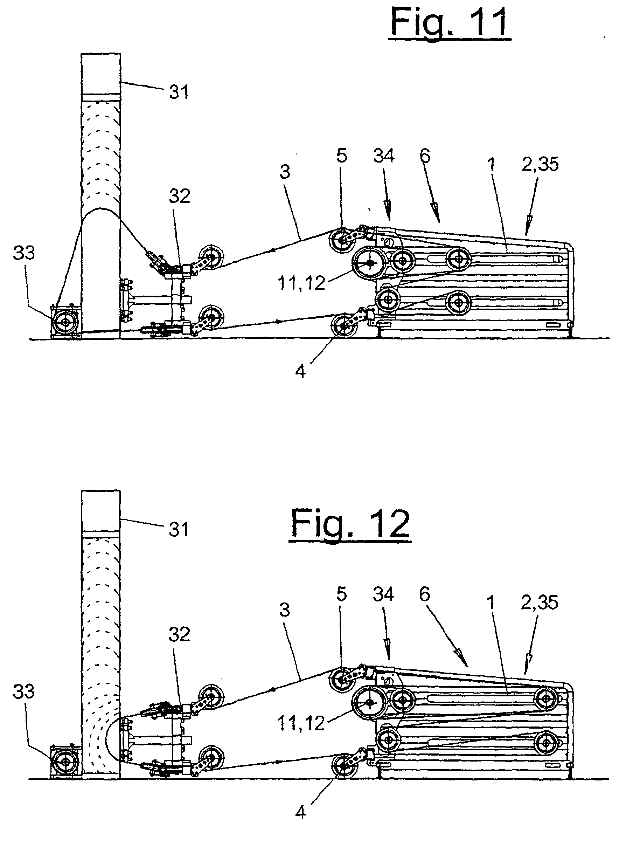

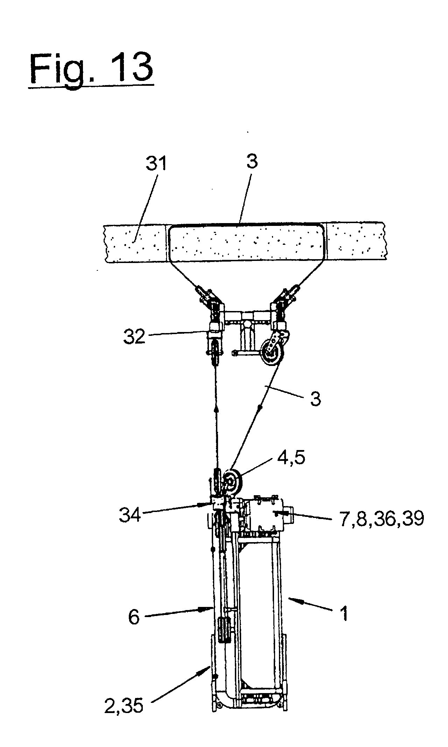

Wie Figur 11 bis 13 verdeutlichen, wird die Seilsägemaschine (1) zum Sägen von stehenden Wänden, liegenden Böden oder anderen beliebig orientierten Werkstücken (31) aus Stein, Beton, Mauerwerk oder dgl. eingesetzt und besitzt ein endloses und umlaufend angetriebenes flexibles Sägeseil (3) mit geeigneten abrasiven Schleif- oder Schneidelementen am Umfang, z.B. Diamantbelägen. Die Seilsägemaschine (1) ist mit Abstand vom Werkstück (31) positioniert und treibt das Sägeseil (3) umlaufend an. Das Sägeseil (3) tritt aus der Seilsägemaschine (1) an einem Seilauslauf (5) aus, wird in geeigneter Weise um das Werkstück (31) herum und gegebenenfalls um ein oder mehrere Seilumlenkungen (32,33) vor und/oder hinter dem Werkstück (31) geführt und gelangt an einem Seileinlauf (4) wieder zurück in die Seilsägemaschine (1). Das umlaufende bewegte Sägeseil (3) wird dabei an das Werkstück (31) angepreßt und schneidet sich durch den Anpreßdruck in das Werkstück (31). Figur 11 und 12 zeigen den Sägefortschritt am Beispiel einer stehenden Wand (31) in Seitenansicht. Figur 13 verdeutlicht eine Draufsicht auf die Arbeitsstellung.

Die Seilsägemaschine (1) kann in verschiedenen Arbeitspositionen am Werkstück angeordnet sein und gegebenenfalls ein oder mehrere der vorgenannten zusätzlichen externen Seilumlenkungen (32,33) aufweisen. Sie kann je nach Einsatzbereich als Wandsäge, Zirkelseilsäge, Seil-Tauchsägevorrichtung, Sturz-Rohrschneidevorrichtung oder dgl. ausgebildet sein.

In den gezeigten Ausführungsbeispielen hat die Seilsägemaschine (1) ein Gestell (2), das einen Antrieb (7) und einen beweglichen und angetriebenen Seilspeicher (6) für das Sägeseil (3) aufnimmt. Der Seilspeicher (6) nimmt die bei zunehmender Schnittiefe sich vergrößernde freie Seillänge auf und spannt das Sägeseil (3) nach. Figur 11 und 12 zeigen diese Anordnung.

Der Antrieb (7) für das Sägeseil (3) besteht jeweils aus einem Motor (8), der gegebenenfalls unter Zwischenschaltung eines Getriebes (9) und einer Wechselkupplung (10) zwei oder mehr Antriebsräder (11,12) antreibt. Das Sägeseil (3) ist über beide Antriebsräder (11,12) geschlungen und wird umlaufend angetrieben.

Im Ausführungsbeispiel der Figur 1 sind die Antriebsräder (11,12) gleichachsig übereinander angeordnet und drehen gleichsinnig und mit gleicher Geschwindigkeit. In der Ausführung von Figur 8 sind die beiden Antriebsräder (11,12) mit parallelen Rollenachsen (26) mit Abstand nebeneinander und im wesentlichen auf gleicher Höhe angeordnet. Sie drehen mit gleicher Geschwindigkeit und gegenläufig.

Bei Figur 1 bis 3 können die Antriebsräder (11,12) auf eine gemeinsame Achse (26) als Einzelräder aufgesteckt sein. Alternativ kann es sich auch um ein einstückiges Doppelrad mit zwei Laufrillen handeln. In beiden Ausführungen erstreckt sich die Rollen- und Antriebsachse (26) im wesentlichen parallel zum Untergrund und bei normaler stehender Anordnung des Gerätes im wesentlichen horizontal.

Der Motor (8) kann in beliebig geeigneter Weise ausgebildet sein. Im bevorzugten Ausführungsbeispiel handelt es sich um einen Elektromotor, insbesondere einen Wechselstrommotor bzw. Drehstrommotor. Dieser kann in geeigneter Weise über Phasenanschnitts- oder Frequenzsteuerung gesteuert und gegebenenfalls geregelt werden.

Zwischen Motor (8) und Antriebsrädern (11,12) ist in den gezeigten Ausführungen ein untersetzendes Getriebe (9) geschaltet, das bei einer entsprechenden Motorwahl zumindest in der Ausführung von Figur 1 gegebenenfalls auch entfallen kann. Vorzugsweise handelt es sich hierbei um ein Zahnradgetriebe. In der Variante von Figur 8 ist ein gemeinsames Getriebe (9) für beide Antriebsräder (11,12) mit einer entsprechenden Umkehrstufe für den Wechsel der Drehrichtung ausgebildet. Zusätzlich kann eine geeignete Synchronisiereinheit vorhanden sein, die trotz gegenläufiger Raddrehung die gleichmäßige Geschwindigkeit sicherstellt und dabei Spiel und Toleranzen im Getriebe ausgleicht.

Der Antrieb (7) kann die vorerwähnte Wechselkupplung (10) aufweisen, die je nach Anordnung einen Wechsel des Motors (8) für sich allein oder mitsamt des Getriebes (9) erlaubt. Alternativ kann eine doppelte Wechselkupplung vorhanden sein, die zwischen Motor (8) und Getriebe (9) sowie zwischen Getriebe (9) und Antriebsrädern (11,12) vorhanden ist. Vorzugsweise ist die Wechselkupplung (10) als Schnellkupplung ausgebildet, die z.B. mit einem Steckeinsatz ausgestattet ist. Beispielsweise kann die Motorwelle als Keilwelle ausgebildet und in eine entsprechende Aufnahme am Getriebe (9) oder an den Antriebsrädern (11,12) gesteckt werden. Mit dem Motor (8) kann auch die Stromversorgung und Steuerung gewechselt werden.

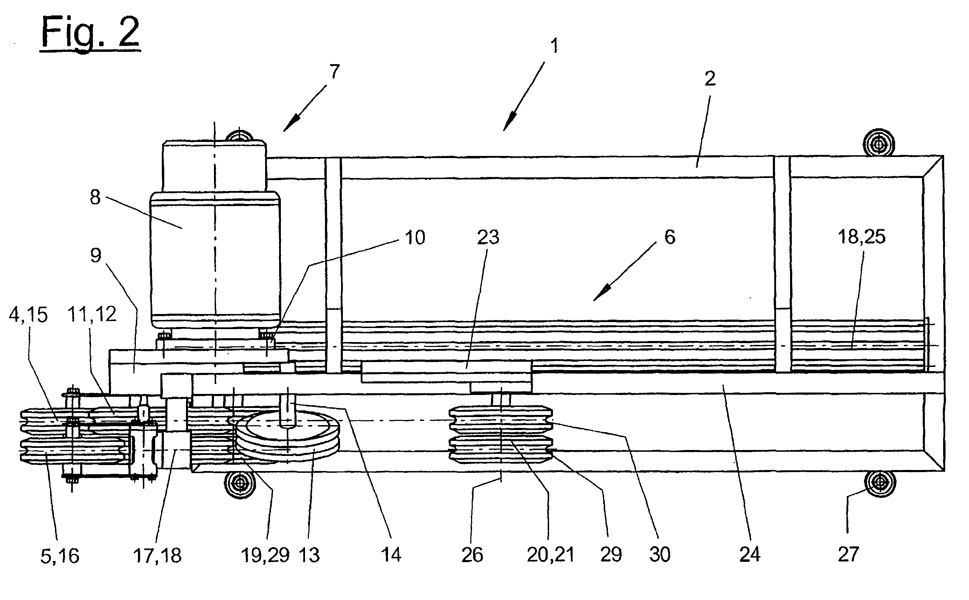

In der Ausführung von Figur 1 bis 3 ist benachbart zu den Antriebsräder (11,12) mindestens eine Ausgleichsrolle (13) angeordnet. Diese sitzt vorzugsweise in Maschinenlängsrichtung (18) vor den Antriebsrädern (11,12). Die Ausgleichsrolle (13) hat vorzugsweise eine parallel zur Antriebsrollenachse (26) ausgerichtete Rollenachse (14) und eine entsprechende Rollen-Formgebung. Alternativ kann die Ausgleichsrolle (13) auch eine schräge Rollenachse (14) bzw. ein Schräglager (vergleiche Figur 1 und 2) haben. Die Schräglage besteht z.B. im wesentlichen in der Senkrechten nach unten oder oben. Durch die Schräglage wird das Sägeseil (3) zwängungsfrei vom einen zum anderen Antriebsrad (11,12) gelenkt. Der Abstand der Ausgleichsrolle (13) zur Rollenachse (26) der Antriebsräder (11,12) ist einstellbar. Er bleibt im Betrieb aber konstant, um die Schlaufenlänge gleich zu lassen.

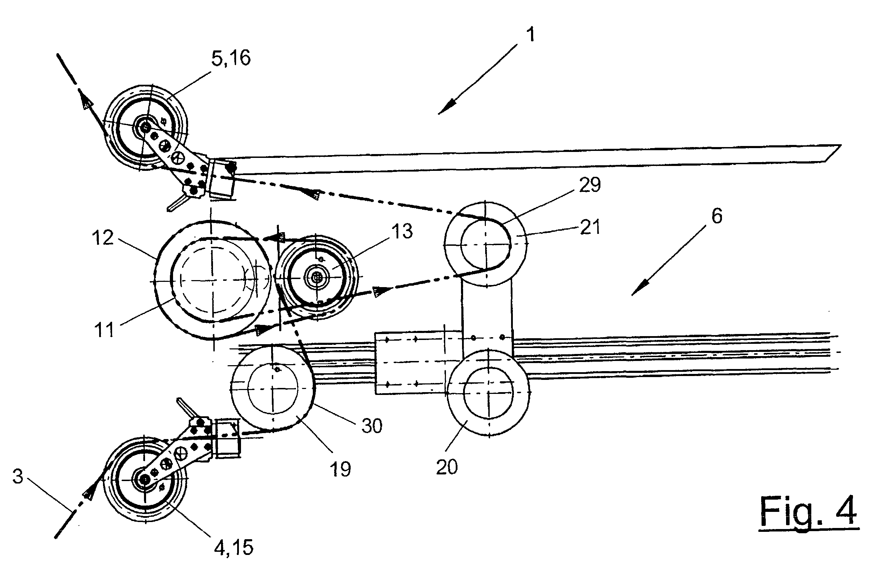

Das Gestell (2) ist vorzugsweise als rahmenartiges Gestell ausgebildet und ruht mit vier höhenverstellbaren Gestellfüßen (27) auf dem Untergrund. Zusätzlich können zwei oder mehr abnehmbare Transporträder (40) mit einer Zapfenführung (37) vorhanden sein (vergleiche Figur 9). Eine besondere Fixierung auf dem Untergrund ist entbehrlich. Das Gestell (2) ist für eine stehende Anordnung der Seilsägemaschine (1) ausgebildet. Dabei erstrecken sich die Rollenachsen (26) parallel zur Gestellunterkonstruktion bzw. zum Untergrund. Das Sägeseil (3) läuft dadurch im wesentlichen in einer vertikalen Ebene um. Die nachfolgend näher beschriebenen Figuren 4 bis 7 zeigen diese Anordnung.

Die Seilsägemaschine (1) besitzt einen vorzugsweise unten angeordneten Seileinlauf (4) und einen oben am Gestell (2) angeordneten Seilauslauf (5). Die Anordnung kann alternativ auch vertauscht sein. Der Seileinlauf (4) und der Seilauslauf (5) besteht jeweils aus einer frei drehbar gelagerten Einlaufrolle (15) bzw. Auslaufrolle (16). Die Rollen (15,16) sind von einem abgewinkelten Lagerarm getragen, der seinerseits frei drehbar um eine Schwenkachse (17) bzw. ein Schwenklager am Gestell (2) gelagert ist. Das Schwenklager (17) kann mit einer geeigneten Arretierung (28) in der gewählten Schwenkstellung arretiert werden. Figur 1 und 8 zeigen in dünnen gestrichelten Linien alternative Stellungen. Die Schwenklager (17) sind als Hohlachsen ausgebildet, durch die das Sägeseil (3) geführt ist. Die Hohlachsen verhindern ein freies Auspeitschen des Sägeseils (3) bei einem Riß.

Eine der beiden Schwenkachsen (17), vorzugsweise diejenige des Seileinlaufs (4), erstreckt sich vorzugsweise parallel zur Maschinenlängsachse (18). Die andere Schwenkachse (17), vorzugsweise diejenige des Seilauslaufs (5), erstreckt sich hingegen schräg in der Vertikalebene zur Maschinenlängsachse (18). Der Seilauslauf (5) ist dadurch schräg nach außen abgewinkelt. Diese Schrägstellung ist für die Seilkinematik günstiger als eine Parallelanordnung beider Schwenkachsen (17).

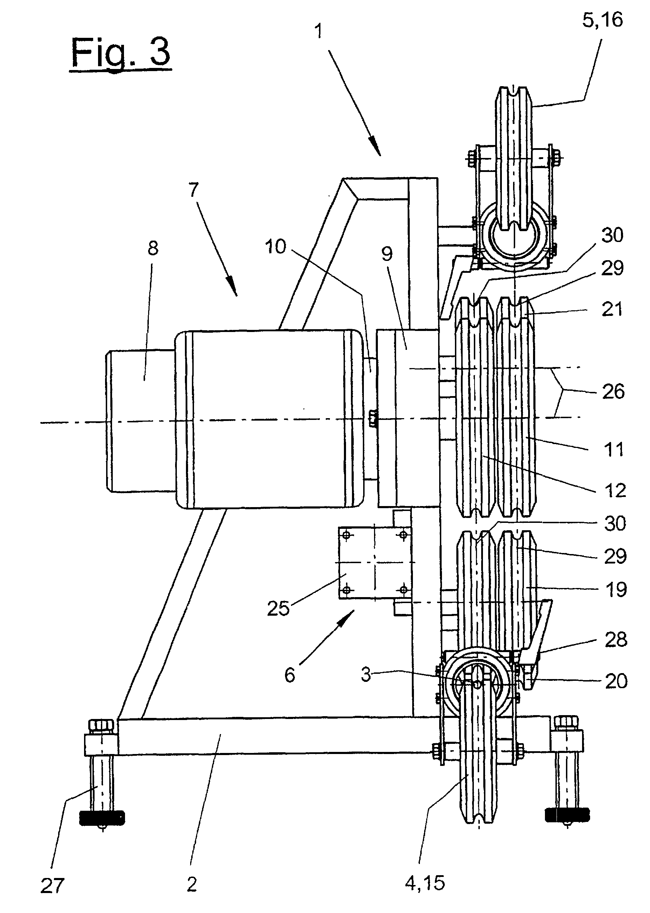

Wie insbesondere Figur 3 im weiteren verdeutlicht, sind der Seileinlauf (4) und der Seilauslauf (5) in der Horizontalen seitlich versetzt zueinander angeordnet. Der Seileinlauf (4) befindet sich näher an der vertikalen Strebe des Gestells (2) als der Seilauslauf (5). Der Seileinlauf (4) befindet sich außerdem in einer gemeinsamen vertikalen Ebene mit dem innenliegenden Antriebsrad (12). Der Seilauslauf (5) liegt in einer gemeinsamen vertikalen Ebene mit dem außenliegenden Antriebsrad (11).

Die Schräganordnung zumindest einer der beiden Schwenkachsen (17) von Seileinlauf (4) bzw. Seilauslauf (5) ist auch in der Variante von Figur 8 vorhanden. Auch der seitliche Versatz der Einlauf- und Auslaufrolle (15,16) kann hier gegeben sein. Die Rollen (15,16) können sich aber auch auf gleicher Höhe befinden und dabei vorzugsweise in der gleichen Vertikalebene mit den beiden Antriebsrädern (11,12) liegen.

Der Seilspeicher (6) besteht in beiden Ausführungsbeispielen aus mindestens einer stationären Umlenkrolle (19) und mehreren in Richtung der horizontalen Maschinenlängsachse (18) hin- und herbeweglichen Umlenkrollen (20,21,22). Letztere sind vorzugsweise an einem Joch (23) angeordnet, das auf einer horizontalen Führung (24) beweglich gelagert ist und von einem Speicherantrieb (25) vor- und zurückbewegt wird. Zwischen dem Joch (23) mit der Führung (24) und den Umlenkrollen (20,21,22) kann die in Figur 9 und 10 dargestellte Abdeckplatte (41) angeordnet sein, die im Gestell (2) befestigt ist und Bewegungsschlitze für die Achsen der Umlenkrollen (20,21,22) aufweist. Die Abdeckplatte (41) und die Bewegungsschlitze können Schutzfunktionen und ggf. auch Führungsfunktionen für die Umlenkrollen (20,21,22) wahrnehmen. Außenseitig kann über den Antriebsrädern (11,12) und den Umlenkrollen (19,20,21,22) auch noch eine lösbare Schutzabdeckung (nicht dargestellt) angebracht sein, die die gesamte Seitenfläche des Gestells (2) nebst der Sägeseilführung bedeckt und nur den Seileinlauf (4) und Seilauslauf (5) offen läßt.

Der Speicherantrieb (25) kann in beliebig geeigneter Weise ausgebildet sein. Im bevorzugten Ausführungsbeispiel handelt es sich um einem kolbenstangenlosen Pneumatikzylinder. Der Seilspeicher (6) nimmt die entsprechend der Einschnittiefe sich vergrößernde freie Seillänge auf und puffert diese. Das Sägeseil (3) braucht dadurch trotz fortschreitender Schnittiefe nicht gekürzt zu werden. Der Speicherantrieb (25) hält dabei das zwischen den beweglichen Umlenkrollen (20,21,22) und der oder den stationären Umlenkrollen (19) bzw. den Antriebsrädern (11,12) in mehren Schlaufen gelegte Sägeseil (3) unter Spannung und federt dabei gegebenenfalls Schwingungen ab.

In den gezeigten Ausführungsformen ist eine stationäre Rollenanordnung (19) nahe des Seileinlaufs (4) angeordnet. Sie besteht aus einer einstückigen Doppelrolle mit zwei in Achsrichtung übereinander angeordneten Laufrillen (29,30). Die innere Laufrille (30) und liegt näher am Gestell (2) als die äußere Laufrille (29). Alternativ können auch zwei Einzelräder vorhanden sein, die wie die Laufrillen (29, 30) fest miteinander verbunden sind oder getrennt und frei drehbar ausgebildet sind.

Die Umlenkrolle (19) ist zwischen dem Seileinlauf (4) und den Antriebsrädern (11,12) angeordnet. Ihre innere Rille (30) liegt gemäß Figur 3 in der gleichen Vertikalebene wie die Laufrille der Einlaufrolle (15) und das innere Antriebsrad (12). Die äußere Laufrille (29) der Umlenkrolle (19) liegt hingegen in der gleichen Vertikalebene wie die Laufrille der Auslaufrolle (16) und das äußere Antriebsrad (11). Am Seilauslauf (5) ist in der bevorzugten Ausführungsform keine stationäre Umlenkrollenanordnung vorhanden. In einer nicht dargestellten Bauvariante kann dies auch anders sein.

Das quer zur Führung (24) sich erstreckende Joch (23) trägt im Ausführungsbeispiel von Figur 1 bis 3 zwei mit Abstand quer zur Maschinenlängsachse (18) nebeneinander angeordnete Umlenkrollenanordnungen (20,21), die jeweils als Doppelrollen mit zwei Laufrillen (29,30) ausgebildet sind. Der Aufbau und die Rillenzuordnung ist die gleiche wie bei der stationären Umlenkrolle (19). Insbesondere die äußere Laufrille (29) der Umlenkrolle (21) fluchtet mit der Auslaufrolle (16) und dem äußeren Antriebsrad (11). Ansonsten liegen jeweils die inneren und äußeren Laufrillen (29,30) der Umlenkrollen (19,20,21) in der gleichen Vertikalebene und Seillaufebene.

In der Bauvariante von Figur 8 kann statt der oberen Doppelrolle (21) eine einzelne Umlenkrolle (22) vorhanden sein. Die Rollenachsen (26) aller Umlenkrollen (19,20,21,22) erstrecken sich parallel zueinander und zu der Achse der Antriebsräder (11,12).

In beiden Ausführungsformen ist die Gesamtzahl der einzelnen Laufrillen (29,30) der beweglichen Umlenkrollen (20,21,22) kleiner oder gleich der Gesamtzahl der Antriebsräder (11,12) und gegebenenfalls der Ausgleichsrolle (13) sowie der Laufrillen (29,30) der stationären Umlenkrolle(n) (19). In Figur 1 bis 3 sind zwei beweglichen Umlenkrollen (20,21) bzw. vier bewegliche Laufrillen (29,30) vorhanden, die mit vier stationären Rädern (11,12,13,19) mit fünf Laufrillen (29,30) zusammenwirken. In Figur 8 stehen den drei Laufrillen (29,30) der beweglichen Umlenkrollen (21,22) vier Laufrillen (29,30) der stationären Rollen oder Räder (11,12,19) gegenüber.

Figur 4 bis 7 zeigen verschiedene Belegungsmöglichkeiten für das Sägeseil (3) an einer Seilsägemaschine (1) von Figur 1 bis 3. Pfeile geben die Laufrichtung des Sägeseils (3) an. Die verschiedenen Seilstränge oder Seilabschnitte können sich wegen der unterschiedlichen Rillenhöhe überkreuzen. Zur besseren Verdeutlichung der Seilführung sind die Laufrillen (29,30) der Doppelrollen (19,20,21) mit unterschiedlichen Durchmessern dargestellt. Der größere Durchmesser steht für die gegenüber dem Gestell (2) innenliegende Laufrille (30) und der kleinere Durchmesser für die außenliegende Laufrille (29).

In der ersten Variante von Figur 4 wird das Sägeseil (3) zunächst vom Seileinlauf (4) auf die innenliegende Laufrille (30) der stationären Doppelrolle (19) und von dort auf das innenliegende Antriebsrad (12) geführt. Über die schräge Ausgleichsrolle (13) gelangt das Sägeseil (3) dann auf das außenliegende Antriebsrad (11) und geht von hier aus über die außenliegende Laufrille (29) der Umlenkrolle (21) auf den Seilauslauf (5). Die Umlenkrolle (20) ist hier nicht belegt. Bei dieser Ausführung beinhaltet der Seilspeicher (6) durch die einfache Umlenkung an der Rolle (21) zwei Seilstränge.

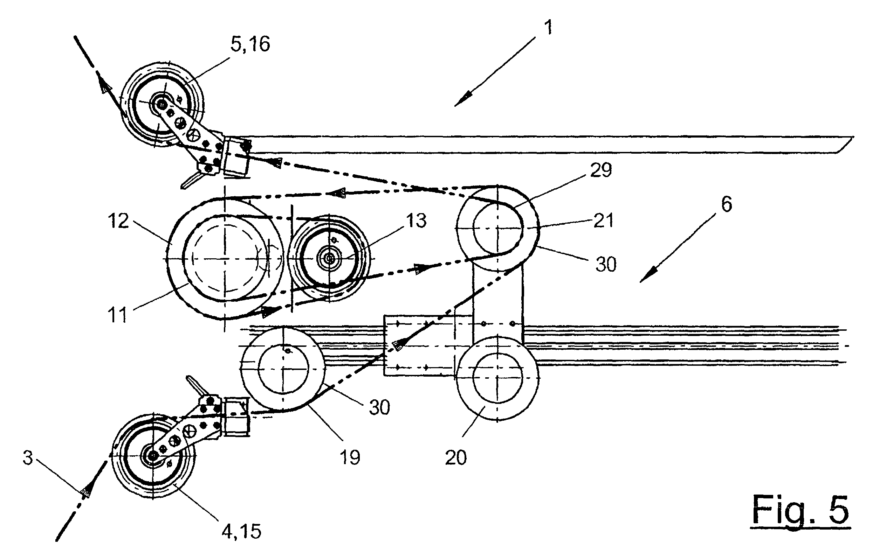

In der Variante von Figur 5 hat der Seilspeicher (6) vier Seilstränge. Abweichend von Figur 4 wird hier das Sägeseil (3) von der inneren Laufrille (30) der stationären Umlenkrolle (19) zur inneren Laufrille (30) der beweglichen Umlenkrolle (21) und von hier weiter zum inneren Antriebsrad (12) gelenkt. Nach Umlaufen der Ausgleichsrolle und des außenliegenden Antriebsrades (11) gelangt das Sägeseil (3) auf die äußere Laufrille (29) der Umlenkrolle (21) und von hier aus zum Seilauslauf (5).

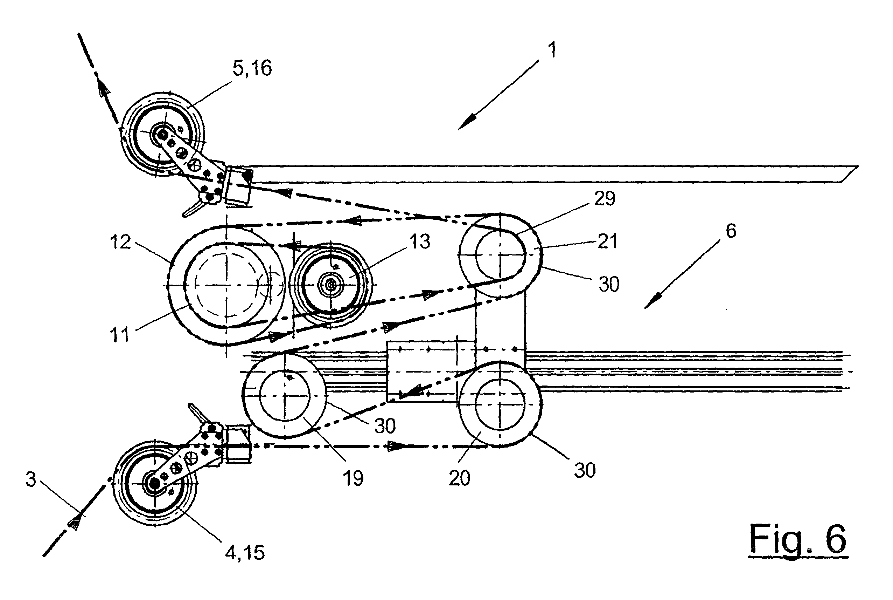

Figur 6 zeigt eine weitere Abwandlung mit sechs Seilsträngen unter Einbeziehung der Umlenkrolle (20). Das einlaufende Sägeseil (3) wird zunächst über die innere Laufrille (30) der bewegliche Umlenkrolle (20) zur inneren Laufrille (30) der stationären Umlenkrolle (19) und von hier zur inneren Laufrille (30) der zweiten beweglichen Umlenkrolle (21) geführt. Von dieser gelangt das Sägeseil (3) wieder analog zu Figur 5 über das innere Antriebsrad (12), die Ausgleichsrolle (13) und das äußere Antriebsrad (11) zur äußeren Rille (29) der beweglichen Umlenkrolle (21) und von hier zum Seilauslauf (5).

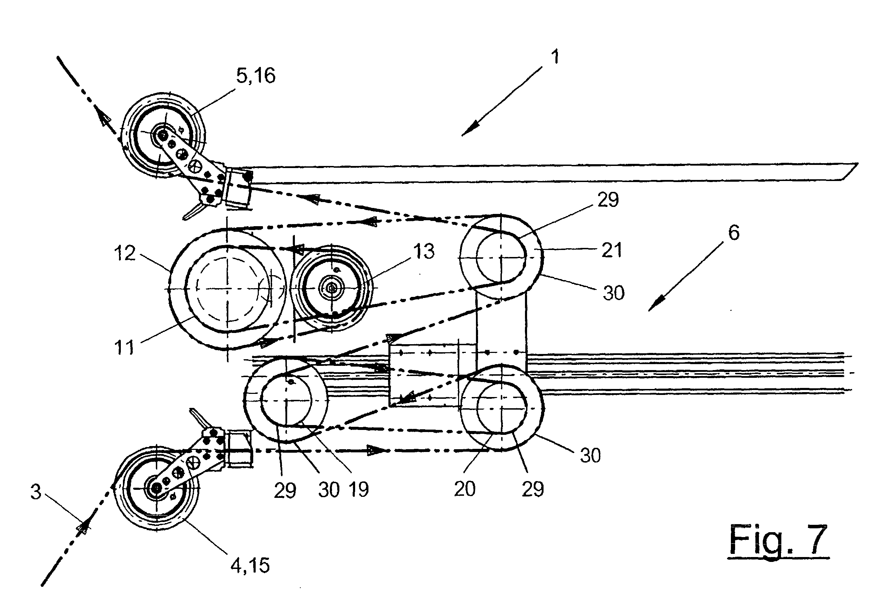

Die Variante von Figur 7 hat die maximale Speicherkapazität mit acht Seilsträngen. Die Seilführung vom Seileinlauf (4) bis zur inneren Laufrille (30) der stationären Umlenkrolle (19) ist der gleiche wie in Figur 6. Abweichend von Figur 6 wird dann das Sägeseil (3) von der inneren Laufrille (30) der stationären Umlenkrolle (19) zunächst auf die äußere Laufrille (29) der beweglichen Umlenkrolle (20) zurückgeführt und gelangt von hier über die äußere Laufrille (29) der stationären Umlenkrolle (19) zur inneren Laufrille (30) der beweglichen Umlenkrolle (21). Von hier aus ist die Seilführung wieder die gleiche wie in Figur 6.

In Figur 8 ist ebenfalls eine mögliche Variante für die Seilführung dargestellt. Das Sägeseil (3) wird vom Seileinlauf (4) in einer gemeinsamen Vertikalebene zunächst über die bewegliche Umlenkrolle (21) zur stationären Umlenkrolle (19) und von hier weiter über die zweite bewegliche Umlenkrolle (22) zu den beiden Antriebsrädern (11,12) geführt, von denen aus das Sägeseil (3) unmittelbar zum Seilauslaß (5) gelangt. Die beiden Umlenkrollen (19,21) sind als Doppelrollen ausgebildet, so daß in einer nicht dargestellten Variante das Sägeseil vor der Umlenkrolle (22) noch in einer zusätzlichen Schlaufe über die beiden Rollen (19,21) geführt werden kann.

Figur 9 und 10 zeigen zwei weitere Bauvarianten der Seilsägemaschine (1), die sich in diesen Ausführungsbeispielen in mehrere Grundkomponenten zerlegen läßt. Die eine Grundkomponente wird von einem Hauptrollenkopf (34) gebildet, der über eine Zapfenführung (37) und eine geeignete Befestigung (38), z. B. eine Exzenterschraube, lösbar am Gestell (2) befestigt ist. Der Hauptrollenkopf besteht aus einem Trägerrahmen, an dem zumindest die stationäre Umlenkrolle (19) und der Seileinlauf (4) sowie der Seilauslauf (5) mit den zugehörigen Rollen (15,16) angeordnet sind. Bei der in Figur 9 dargestellten Ausführungsform trägt der Hauptrollenkopf (34) außerdem noch das Getriebe (9) und die Antriebsräder (11,12) sowie die ggf. vorhandene Ausgleichsrolle (13).

Die zweite Grundkomponente wird von der Motoreinheit (36) gebildet, die in diesem Ausführungsbeispiel aus dem Motor (8) und der Wechselkupplung (10) besteht. Die dritte Grundkomponente wird von einer Gestelleinheit (35) gebildet, die aus dem Gestell (2) mit dem Seilspeicher (6) nebst Speicherantrieb (25) und den beweglichen Umlenkrollen (20,21) oder alternativ auch der Umlenkrolle (22) besteht. Bei dieser Komponentenzerlegung sind der Hauptrollenkopf (34) und die Motoreinheit (36) ungefähr gleich schwer und haben miteinander in etwa das Gewicht der Gestelleinheit (35).

In einer nicht dargestellten Variante zu Figur 9 ist es möglich, das Getriebe (9) der Motoreinheit (10) zuzuordnen und direkt am Motor (8) anzuflanschen. Die Wechselkupplung (10) besteht dann zwischen dem Getriebe (9) und den Antriebsrädern (11,12) am Hauptrollenkopf 834).

Figur 10 zeigt die Seilsägemaschine (1) in einer perspektivischen Ansicht von der Rückseite her. Bei dieser Ausführungsform sind die Antriebsräder (11,12) der Motoreinheit (36) zugeordnet. In diesem Fall bilden der Motor (8) mit dem Getriebe (9) und die Antriebsräder (11,12) eine sogenannte Antriebseinheit (39), die sich lösbar mit dem Hauptrollenkopf (34) verbinden läßt. Ggf. kann hierbei wiederum eine Wechselkupplung (10) zwischen Motor (8) und Getriebe (9) und/oder zwischen Getriebe (9) und den Antriebsrädern (11) vorhanden sein, so daß sich die Antriebseinheit (39) noch weiter zerlegen läßt. Der Hauptrollenkopf (34) besteht in der Variante von Figur 10 dann nur noch aus der Umlenkrolle (19), dem Seileinlauf (4), dem Seilauslauf (5) und ggf. der Ausgleichsrolle (13).

In der Anbaustellung komplettiert der Hauptrollenkopf (34) das Gestell (2) an der vorderen Maschinenseite und bildet den vorderen Gestellabschluß. Durch die Zapfenführungen (37) und den Zug des Sägeseils (3) bzw. des Speicherantriebs (25) ist die Verbindung selbst sichernd. Die Exzenterschraube (38) braucht dann nur noch das Spiel aus der Zapfenführung (37) zu nehmen.

Der abnehmbare Motor (8) oder die Motoreinheit (36) können auch in Verbindung mit anderen Bearbeitungsmaschinen (nicht dargestellt) eingesetzt werden und zwischen den verschiedenen Maschinen ausgetauscht werden. Hierbei handelt es sich vorzugsweise um andere Arten von Bearbeitungsmaschinen für die Bearbeitung von Steinen, Beton und dergleichen Materialien. Die Seilsägemaschine (1) mit der Gestelleinheit (35) und ggf. dem Hauptrollenkopf (34) ist dann als antriebslose Rumpfmaschine ausgebildet. In ähnlicher Weise sind auch die anderen Bearbeitungsmaschinen als Rumpfmaschinen gestaltet. Für diese Rumpfmaschinen genügt dann ein Motor (8) bzw. eine Motoreinheit (36), die je nach Bedarf zum Betrieb an den Rumpfmaschinen angesteckt wird. Um den Motor (8) bzw. die Motoreinheit (36) mit den verschiedenen Rumpfmaschinen und deren unterschiedlichen Kinematiken und Antriebsbedürfnissen kombinieren zu können, hat der Motor (8) eine entsprechend weit ausgelegte Steuerung oder Regelung, die eine optimale Anpassung an die jeweils erforderlichen Drehmomenten- oder Drehzahlverläufe ermöglicht.

Abwandlungen der gezeigten Ausführungsformen sind in verschiedener Weise möglich. Zum einen kann die konstruktive Gestaltung des Antriebs (7) im Rahmen der Erfindung beliebig variieren. Ferner kann auch der Seilspeicher (6) unterschiedlich ausgebildet sein, wobei die Zahl und Anordnung der stationären und beweglichen Umlenkrollen varieren kann. Zudem kann die Zahl und Anordnung der Antriebsräder (11,12) von den dargestellen Ausführungsbeispielen abweichen. Variabel ist außerdem die Gestaltung und Aufstellung des Gestells (2). Dieses kann alternativ liegend oder hochkant angeordnet sein. Bei einer liegenden Anordnung ist die Seillaufebene im wesentlichen horizontal. Die in den Ausführungsbeispielen gezeigte im wesentlichen vertikale Seillaufebene hat allerdings kinematische Vorteile.

### BEZUGSZEICHENLISTE

- 1: Seilsägemaschine
- 2: Gestell
- 3: Sägeseil
- 4: Seileinlauf
- 5: Seilauslauf
- 6: Seilspeicher
- 7: 7 Antrieb
- 8: Motor
- 9: Getriebe
- 10: Wechselkupplung, Schnellkupplung
- 11: Antriebsrad, außen
- 12: Antriebsrad, innen
- 13: Ausgleichsrolle
- 14: schräge Rollenachse, Schräglager
- 15: Einlaufrolle
- 16: Auslaufrolle
- 17: Schwenkachse, Schwenklager
- 18: Maschinenlängsachse
- 19: Umlenkrolle, Doppelrolle, stationär
- 20: Umlenkrolle, Doppelrolle, beweglich
- 21: Umlenkrolle, Doppelrolle, beweglich
- 22: Umlenkrolle, Einzelrolle, beweglich
- 23: Joch
- 24: Führung
- 25: Speicherantrieb, Pneumatikzylinder
- 26: Rollenachse
- 27: Gestellfuß
- 28: Arretierung
- 29: äußere Rille, äußeres Rad
- 30: innere Rille, inneres Rad
- 31: Werkstück, Wand
- 32: Seilumlenkung
- 33: Seilumlenkung
- 34: Hauptrollenkopf
- 35: Gestelleinheit
- 36: Motoreinheit
- 37: Zapfenführung
- 38: Befestigung, Exzenterschraube
- 39: Antriebseinheit
- 40: Transportrad
- 41: Abdeckplatte

## Patentansprüche

1. Seilsägemaschine mit einem Gestell (2), einem motorischen Antrieb (7) und mindestens einem Antriebsrad (11,12) sowie einem Seilspeicher (6) mit mindestens einer stationären Umlenkrolle (19) und mehreren beweglichen Umlenkrollen (20,21,22) für ein endloses umlaufend angetriebenes Sägeseil (3), **dadurch gekennzeichnet, daß** der Antrieb (7) mehrere vom Sägeseil (3) umschlungene benachbarte Antriebsräder (11,12) aufweist, die gemeinsam von einem Motor (8) angetrieben sind.

2. Seilsägemaschine nach Anspruch 1, **dadurch gekennzeichnet, daß** die Antriebsräder (11,12) mit einer gemeinsamen stationären Achse (26) übereinander angeordnet und gleichsinnig angetrieben sind.

3. Seilsägemaschine nach Anspruch 2, **dadurch gekennzeichnet, daß** benachbart zu den Antriebsrädern (11,12) eine Ausgleichsrolle (13) angeordnet ist.

4. Seilsägemaschine nach einem der Ansprüche 1 bis 3, **dadurch gekennzeichnet, daß** der Antrieb (7) eine Wechselkupplung (10) aufweist.

5. Seilsägemaschine nach Anspruch 4, **dadurch gekennzeichnet, daß** die Wechselkupplung (10) zwischen dem Motor (8) und einem den Antriebsrädern (11,12) vorgeschalteten Getriebe (9) angeordnet ist.

6. Seilsägemaschine nach einem der Ansprüche 1 bis 5, **dadurch gekennzeichnet, daß** die Umlenkrollen (19,20,21) als gleichachsig übereinander angeordnete, frei drehbare Doppelrollen mit mehreren Laufrillen (29,30) ausgebildet sind.

7. Seilsägemaschine nach einem der Ansprüche 1 bis 6, **dadurch gekennzeichnet, daß** die Zahl der Laufrillen (29,30) der beweglichen Umlenkrollen (20,21,22) kleiner oder gleich der Gesamtzahl der Antriebsräder (11,12) und Laufrillen (29,30) der stationären Umlenk- und Ausgleichsrollen (13,19) ist.

8. Seilsägemaschine nach einem der Ansprüche 1 bis 7, **dadurch gekennzeichnet, daß** der Seilspeicher (6) einen Speicherantrieb (25) mit einem kolbenstangenlosen Pneumatikzylinder aufweist.

9. Seilsägemaschine nach einem der Ansprüche 1 bis 8, **dadurch gekennzeichnet, daß** die Seilsägemaschine (1) einen mit schwenkbaren Rollen (15,16) ausgestatteten Seileinlauf (4) und Seilauslauf (5) aufweist, wobei zumindest einer von beiden eine schräge Schwenkachse (17) aufweist.

10. Seilsägemaschine nach einem der Ansprüche 1 bis 9, **dadurch gekennzeichnet, daß** die Einlauf- und Auslaufrollen (15,16) in Richtung der Rollenachse (26) versetzt zueinander angeordnet sind.

11. Seilsägemaschine nach einem der Ansprüche 1 bis 10, **dadurch gekennzeichnet, daß** die stationäre Umlenkrolle (19), die Einlauf- und Auslaufrolle (15,16) und gegebenenfalls die Antriebsräder (11,12) an einem vom Gestell (2) lösbaren Hauptrollenkopf (34) angeordnet sind.

12. Seilsägemaschine nach einem der Ansprüche 1 bis 11, **dadurch gekennzeichnet, daß** der Antrieb (7) und die Antriebsräder (11,12) zu einer Antriebseinheit (39) verbunden sind, die lösbar mit dem Gestell (2) oder dem Hauptrollenkopf (34) verbunden ist.

13. Seilsägemaschine nach einem der Ansprüche 1 bis 12, **dadurch gekennzeichnet, daß** die Seilsägemaschine (1) in mindestens drei Grundkomponenten zerlegbar ist, nämlich in eine Gestelleinheit (35) mit Gestell (2) und Seilspeicher (6), in den Hauptrollenkopf (34) und in eine Motoreinheit (36) oder in die Antriebseinheit (39).

## Claims

1. Cable-saw machine comprising a frame (2), a motor drive (7) and at least one drive wheel (11, 12) and also a cable store (6) with at least one stationary deflection roller (19) and a plurality of movable deflection rollers (20, 21, 22) for an endless saw cable (3) which is driven in circulation, **characterized in that** the drive (7) comprises a plurality of adjacent drive wheels (11, 12) around which the saw cable (3) wraps and which are driven jointly by a motor (8).

2. Cable-saw machine according to Claim 1, **characterized in that** the drive wheels (11, 12) are arranged one above another with a common stationary axle (26) and are driven in the same direction.

3. Cable-saw machine according to Claim 2, **characterized in that** a compensating roller (13) is arranged adjacent to the drive wheels (11, 12).

4. Cable-saw machine according to one of Claims 1 to 3, **characterized in that** the drive (7) has a change coupling (10).

5. Cable-saw machine according to Claim 4, **characterized in that** the change coupling (10) is arranged between the motor (8) and a gearbox (9) connected upstream of the drive wheels (11, 12).

6. Cable-saw machine according to one of Claims 1 to 5, **characterized in that** the deflection rollers (19, 20, 21) are constructed as freely rotatable double rollers which are arranged one above another on the same axis and have a plurality of running grooves (29, 30).

7. Cable-saw machine according to one of Claims 1 to 6, **characterized in that** the number of running grooves (29, 30) on the moveable deflection rollers (20, 21, 22) is less than or equal to the total number of drive wheels (11, 12) and running grooves (29, 30) on the stationary deflection and compensating rollers (13, 19).

8. Cable-saw machine according to one of Claims 1 to 7, **characterized in that** the cable store (6) comprises a store drive (25) having a pneumatic cylinder with no piston rod.

9. Cable-saw machine according to one of Claims 1 to 8, **characterized in that** the cable-saw machine (1) comprises a cable inlet (4) equipped with pivotable rollers (15, 16) and a cable outlet (5), at least one of the two having an inclined pivot axis (17).

10. Cable-saw machine according to one of Claims 1 to 9, **characterized in that** the inlet and outlet rollers (15, 16) are arranged to be offset with respect to one another in the direction of the roller axle (26).

11. Cable-saw machine according to one of Claims 1 to 10, **characterized in that** the stationary deflection roller (19), the inlet and outlet rollers (15, 16) and, if appropriate, the drive wheels (11, 12) are arranged on a main roller head (34) that can be detached from the frame (2).

12. Cable-saw machine according to one of Claims 1 to 11, **characterized in that** the drive (7) and the drive wheels (11, 12) are joined to form a drive unit (39), which is detachably connected to the frame (2) or the main roller head (34).

13. Cable-saw machine according to one of Claims 1 to 12, **characterized in that** the cable-saw machine (1) can be broken down into at least three basic components, namely into a frame unit (35) with frame (2) and cable store (6), the main roller head (34) and a motor unit (36) or the drive unit (39).

## Revendications

1. Scie à câble comprenant un bâti (2), un dispositif (7) d'entraînement à moteur et au moins une roue (11, 12) motrice, ainsi qu'un enrouleur (6) de câble, ayant au moins un galet (19) fixe de renvoi et plusieurs galets (20, 21, 22) mobiles de renvoi d'un câble (3) de scie sans fin circulant, **caractérisée en ce que** la transmission (7) comporte plusieurs roues (11, 12) motrices voisines sur lesquelles passe le câble (3) de scie et qui sont entraînées conjointement par un moteur (8).

2. Scie à câble suivant la revendication 1, **caractérisée en ce que** les roues (11, 12) motrices sont superposées en ayant un axe (26) fixe commun et sont entraînées dans le même sens.

3. Scie à câble suivant la revendication 2, **caractérisée en ce qu'**un galet (13) de compensation est monté à proximité des roues (11, 12) motrices.

4. Scie à câble suivant l'une des revendications 1 à 3, **caractérisée en ce que** la transmission (7) comprend un accouplement (10) inverseur.

5. Scie à câble suivant la revendication 4, **caractérisée en ce que** l'accouplement (10) inverseur est monté entre le moteur (8) et une transmission (9) montée en amont des roues (11, 12) motrices.

6. Scie à câble suivant l'une des revendications 1 à 5, **caractérisée en ce que** les galets (19, 20, 21) de renvoi sont constitués sous la forme de galets doubles, superposés pouvant tourner librement et comportant plusieurs rainures (29, 30).

7. Scie à câble suivant l'une des revendications 1 à 6, **caractérisée en ce que** le nombre des rainures (29, 30) des galets (20, 21, 22) mobiles de renvoi, est plus petit ou égal au nombre total des roues (11, 12) motrices et des rainures (29, 30) des galets (13, 19) fixes de renvoi et de compensation.

8. Scie à câble suivant l'une des revendications 1 à 7, **caractérisée en ce que** l'enrouleur (6) de câble a un dispositif d'entraînement (25) d'enrouleur, ayant un vérin pneumatique sans tige de piston.

9. Scie à câble suivant l'une des revendications 1 à 8, **caractérisée en ce que** la scie (1) à câble a une entrée (4) de câble et une sortie (5) de câble munies de galets (15, 16) qui peuvent basculer, au moins l'un des deux ayant un axe (17) de basculement qui est incliné.

10. Scie à câble suivant l'une des revendications 1 à 9, **caractérisée en ce que** les galets (15, 16) d'entrée et de sortie sont décalés l'un par rapport à l'autre, dans la direction de l'axe (26) des galets.

11. Scie à câble suivant l'une des revendications 1 à 10, **caractérisée en ce que** le galet (19) fixe de renvoi, les galets (15, 16) d'entrée et de sortie et le cas échéant les roues (11, 12) motrices sont montées sur une tête (34) principale de galet, qui peut être détachée du bâti (2).

12. Scie à câble suivant l'une des revendications 1 à 11, **caractérisée en ce que** le dispositif (7) d'entraînement et les roues (11, 12) motrices sont reliés en un groupe (39) d'entraînement, qui est relié de manière à pouvoir en être détaché au bâti (2) ou à la tête (34) principale de galet.

13. Scie à câble suivant l'une des revendications 1 à 12, **caractérisée en ce que** la scie (1) à câble peut être décomposée en au moins trois éléments de base à savoir, en un groupe (35) de bâti comprenant le bâti (2) et l'enrouleur (6) de câble, en la tête (34) principale de galet et en un groupe (36) moteur ou en le groupe (39) d'entraînement.
